# EUROPEAN PATENT SPECIFICATION

(11) **EP 1 974 342 B1**
(45) Date of publication and mention of the grant of the patent: **15.10.2014**
(21) Application number: 06849033.3
(22) Date of filing: 21.12.2006
(51) Int. Cl.: H04L 29/06, H04M 1/725, H04L 29/08

(54) **Communication system with remote applications**
Kommunikationssystem mit abgesetzten Anwendungen
Système de télécommunication comportant des applications à distance

(30) Priority: 30.12.2005 US 323681
(43) Date of publication of application: 01.10.2008
(73) Proprietor: TeleNav, Inc., Sunnyvale, CA 94086 (US)
(72) Inventor: CHAO, Yi-Chung, San Jose, CA 95129 (US); RENNARD, Robert, Gilroy, CA 95020 (US); JIN, HaiPing, San Jose, CA 95130 (US); DHANANI, Salman, Redmond, WA 98052 (US)
(74) Representative: Liesegang, Eva
(86) International application number: PCT/US2006/048958
(87) International publication number: WO 2007/079017

(56) References cited:
- WO-A-97/50222
- WO-A-03/041440
- WO-A-2005/011235
- US-A1- 2002 164 000
- US-A1- 2004 125 794
- DANIELSEN P J: "THE PROMISE OF A VOICE-ENABLED WEB", COMPUTER, IEEE SERVICE CENTER, LOS ALAMITOS, CA, US, vol. 33, no. 8, 1 August 2000 (2000-08-01) , pages 104-106, XP000987575, ISSN: 0018-9162, DOI: DOI:10.1109/2.863988

## Description

### TECHNICAL FIELD

The present invention relates generally to communication system method and system, and more particularly to a system for communication with and management of remote applications on mobile devices.

### BACKGROUND ART

Communication devices and networks have revolutionized the way people acquire information. Seemingly, limitless volumes and types of data are now instantly available to users from their homes, offices, schools and libraries. Portable devices of various types including portable computers, personal data assistants, wireless communication devices (i.e. cellular phones) and in-vehicle navigation and computer systems can or will be used to communicate from any location.

The current portable devices and the advanced electronic applications often allow many different applications offering a wide variety of functions and services. These applications may be loaded into the mobile equipment directly or may be accessed from storage on a service provider's server. In either location, the mobile user can generally access and utilize the applications manually through key strokes, menu systems or selecting icons in the event a graphical user interface is supported.

Due to the limited size of the mobile device screens and the restricted number of keys on portable equipment, most notably on a mobile phone, these solutions are not very ergonomic. Many users have difficulty navigating or accessing applications or software. It is also difficult to introduce new applications within existing device menus and configurations. Additionally, graphical user interfaces are costly in terms of memory and compute resources on portable devices with increasing features.

Still, portable devices enabled for mobile communications and networks are increasingly popular and customers broadly accept each new generation of mobile devices with new capabilities and features. This fact in combination with the rapid growth in hardware developments and the future promise of enhanced data rate throughput of new communication standards, drive the implementation of ever more complex and sophisticated applications and services.

US 2004/0125794 A1 describes the delivery of applications and services to packet based data devices using a data device-to-speech service bridge wherein the applications can be voice activated applications. For example, the voice application can provide a menu of choices using an audio signal that a user selects. The services and applications can be accessed through two methods. The communication device can download an executable file from a server and run the application or service locally; or the application can stream to the PDA over a wireless data network.

WO 97/50222 A1 provides a telephone device that enables a user to perform data processing functions, such as calculator, recorder, data transmission, answering machine functions. This document describes a method of controlling the operation of the telephone device so as to install telephone processing software wherein the software is downloaded from a software provider. This document also describes that voice commands can be used to traverse menus in order to sample music, place orders, or inquire as to stock trades.

WO2005011235 discloses a mobile phone with hands free functionality where a speech/voice recognition applet is temporarily downloaded from a server. Moreover, the server provides an algorithm to be used by the application.

In spite of the increasing demand, applications and services still have not been fully optimized for mobile users. In fact, it is often cumbersome to interact with current applications and services using portable devices due to the interactive nature, generally requiring substantial user manual input. This raises convenience and real safety concerns, for example, in devices in an automotive environment. What is needed is a system and method that provides services to mobile users with significantly reduced user input requirements.

Due to the mobility, convenience and safety demands of users and new applications, it is increasingly critical to find such a system or solution. Prior attempts to solve these problems have not taught or suggested any solutions. Solutions to these problems have long been out of reach to those skilled in the art.

### DISCLOSURE OF THE INVENTION

The present invention provides a communication method according to claim 1 and a communication system according to claim 5.

Certain embodiments of the invention have other aspects in addition to those mentioned or obvious from the above. The aspects will become apparent to those skilled in the art from a reading of the following detailed description when taken with reference to the accompanying drawings.

### BRIEF DESCRIPTION OF THE DRAWINGS

The accompanying drawings that are incorporated in and form a part of this specification illustrate embodiments of the invention and together with the description, serve to explain the principles of the invention:
FIG. 1 is an architectural diagram of a communication system with remote applications in an embodiment of the present invention;
FIG. 2 is a flow chart of a remote application process of the communication system with remote applications;
FIG. 3 is a flow chart of a server system process of the communication system with remote applications;
FIG. 4 is an architectural diagram of a communication system with remote applications in an alternative embodiment of the present invention;
FIG. 5 is an architectural diagram of a communication system with remote applications in an embodiment of the present invention; and
FIG. 6 is a flow chart of a communication method for providing the communication system with remote applications in an embodiment of the present invention.

### BEST MODE FOR CARRYING OUT THE INVENTION

The following description is presented to enable one of ordinary skill in the art to make and use the invention and is provided in the context of a patent application and its requirements. In the following description, specific nomenclature is set forth to provide a thorough understanding of the present invention. It will be apparent to one skilled in the art that the specific details may not be necessary to practice the present invention. Furthermore, various modifications to the embodiments will be readily apparent to those skilled in the art.

In the following description, numerous specific details are given to provide a thorough understanding of the invention. However, it will be apparent that the invention may be practiced without these specific details. In order to avoid obscuring the present invention, some well-known devices, configurations, and process steps are not disclosed in detail. Likewise, the drawings showing embodiments of the invention are semi-diagrammatic and not to scale and, particularly, some of the dimensions are for the clarity of presentation and are shown greatly exaggerated in the drawing FIGs. In addition, where multiple embodiments are disclosed and described having some features in common, for clarity and ease of illustration, description, and comprehension thereof, similar and like features one to another will ordinarily be described with like reference numerals.

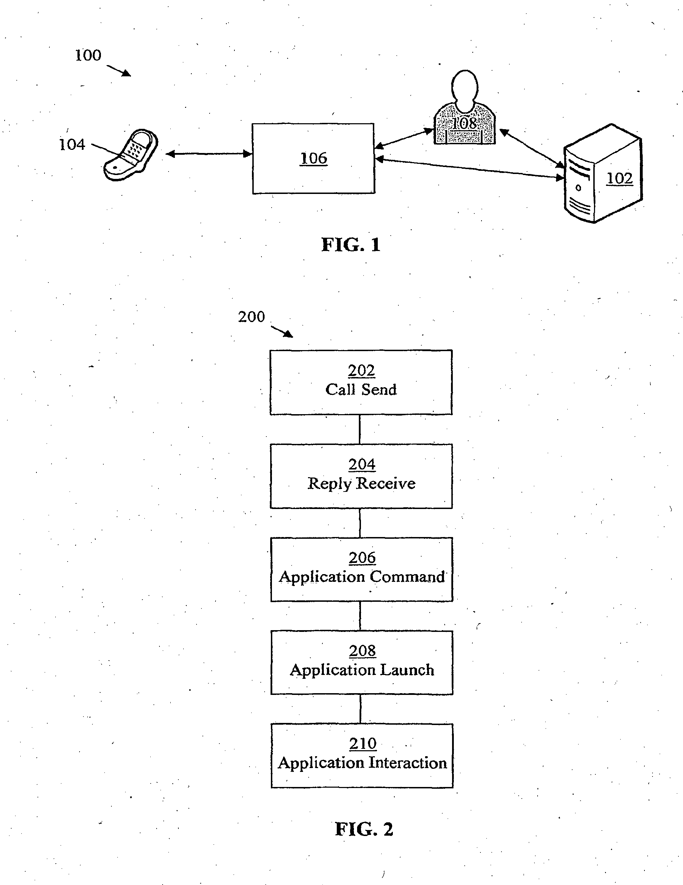

Referring now to FIG. 1, therein is shown an architectural diagram of a communication system with remote applications 100 in an embodiment of the present invention. The communication system with remote applications 100 includes a server system 102 and a communication device 104 communicating through a communication network 106. The communication device 104 contacts the server system 102. The server system 102 provides launching of an application on the communication device 104.

An operator attendant 108, such as an automated attendant, a help desk operator or support personnel, may be contacted to access the server system 102. The server system 102 may be a compute server, application server, navigation server, voice recognition server or other communication server system. The communication device 104 may be a cell phone, satellite phone, in-vehicle phone or other communication device. The communication network 106 may be one or more of a wireless network, telephone network, internet network or other communication medium.

The communication device 104 provides contact, such as a voice call, either by a voice command or any kind of dialing, through the communication network 106 to the server system 102 or the operator attendant 108. The server system 102 may provide authentication for the communication device 104. The authentication may include activation, registration or verification. The communication device 104 may also pass certain information for the use of applications to the server system 102 through voice. The server system 102 responds to requests through the communication device 104 providing appropriate commands to launch a predetermined application on the communication device 104 with the information provided by the communication device 104 through voice command. The server system 102 also provides appropriate commands to launch a predetermined application on other communication devices as instructed by the communication device 104.

For illustrative purposes, one of the communication device 104 is shown, although it is understood that any number of devices may be used in the communication system with remote applications 100 as well. Further, for illustrative purposes, the server system 102 is shown as one server, although it is understood that any number of devices may be used in the communication system with remote applications 100 as well.

As an example, the communication system with remote applications 100 may include a mobile phone providing a voice call to a navigation server system or a phone support operator attendant requesting services on the cell phone or a number of cell phones. After authentication, the voice call can provide the destination information to the server through a voice recognition server. The navigation server system or the phone support operator attendant may authenticate the mobile phone or the number of cell phones and reply with a command message through the wireless network to the mobile phone including message-based, such as SMS, stream-based, such as TCP or packet-based, such as datagrams. The command message may launch a navigation application on the cell phone or the number of cell phones.

The mobile phone or the number of cell phones and the navigation server system may communicate with one another through some or all of a wireless network, a wired network, a wide area network, a metropolitan network and a local area network. The cell phone or the number of cell phones may provide information, including service requests and destination location, to the navigation server system, the phone support operator attendant, the cell phone or the number of cell phones. The navigation server system may launch the application residing on the phone through a message-based command , such as SMS, stream-based, such as TCP or packet-based, such as datagrams, and the application shall provide location based information, such as turn by turn directions and points of interest, to the mobile phone user or users of the number of cell phones. Since the process of launching of the applications and a destination input are all done through the voice call, the need for a user to launch the navigation application and an input destination address using a phone key interface is eliminated, and hence, improves the usability and user interface dramatically.

Referring now to FIG. 2, therein is shown a flow chart of a remote application process 200 of the communication system with remote applications 100. The remote application process 200 includes a call send process in a block 202, a reply receive process in a block 204, an application command process in a block 206, an application launch process in a block 208 arid an application interaction process in a block 210. The remote application process 200 provides application control by the server system 102 of FIG. 1.

The call send process in the block 202 provides contact by the communication device 104 of FIG. 1 with the server system 102 of FIG. 1 through the communication network 106 of FIG. 1. The reply receive process in the block 204 provides a reply from the server system 102 to the communication device 104 through the communication network 106. The application command process in the block 206 provides the appropriate commands to launch the predetermined application on the communication device 104. The application launch process in the block 208 applies the appropriate commands to launch the predetermined application. The application interaction process in the block 210 provides communication between the predetermined application of the communication device 104 and the server system 102 through the communication network 106.

The appropriate commands to launch the predetermined application on the communication device 104, include launch communication to a non-active, predetermined application, specific to launching, such as start up, opening or initializing. The launch communication may also be specific to the communication device 104 and the predetermined application, as well as substantially distinct from other communication. The server system 102 or the communication device 104 may also initiate interaction communication with a request or information one to the other. The application interaction process in the block 210 may continue through the communication network until terminated by either of the server system 102 or the communication device 104.

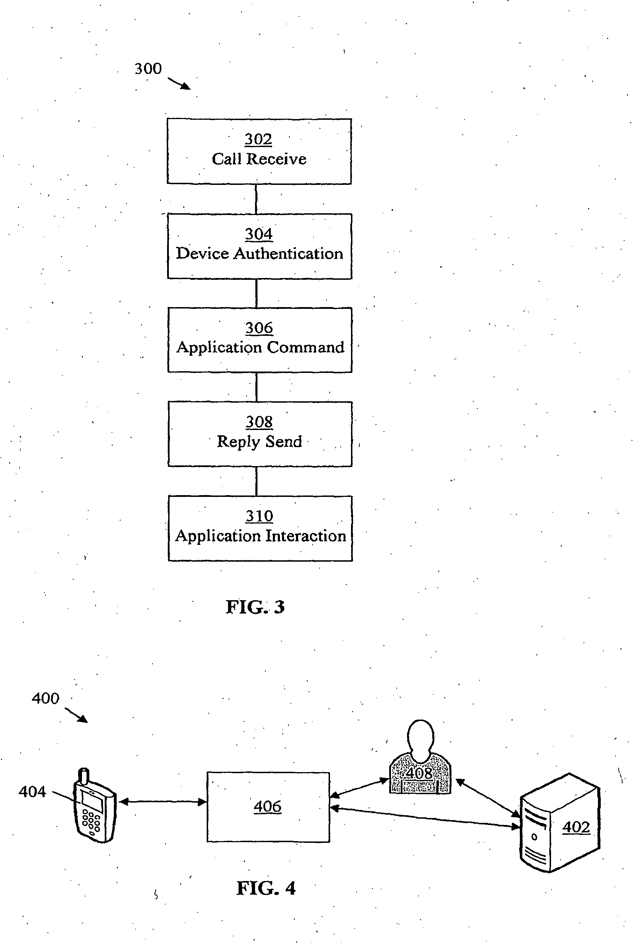

Referring now to FIG. 3, therein is shown a flow chart of a server system process 300 of the communication system with remote applications 100. The server system process 300 includes a call receive process in a block 302, a device authentication process in a block 304, an application command process in a block 306, a reply send process in a block 308 and an application interaction process in a block 310. The server system process 300 provides application control to the communication device 104 of FIG. 1.

The call receive process in the block 302 provides contact by the communication device 104 with the server system 102 of FIG. 1 through the communication network 106 of FIG. 1. The device authentication process in the block 304 provides recognition of the communication device 104 by the server system 102. The application command process in the block 306 provides the appropriate commands to launch the predetermined application of the communication device 104. The reply send process in the block 308 provides contact by the server system 102 with the communication device 104 to transmit the appropriate commands to launch the predetermined application of the communication device 104. The application interaction process in the block 310 provides communication between the predetermined application of the communication device 104 and the server system 102 through the communication network 106.

The appropriate commands to launch the predetermined application include launch communication to a non-active, predetermined application of the communication device 104, specific to launching, such as start up, opening or initializing. The launch communication may also be specific to the communication device 104 and the predetermined application, as well as substantially distinct from other communication. The server system 102 or the communication device 104 may also initiate interaction communication with a request or information one to the other. The application interaction process in the block 210 may continue through the communication network until terminated by either of the server system 102 or the communication device 104.

Referring now to FIG. 4, therein is shown an architectural diagram of a communication system with remote applications 400 in an alternative embodiment of the present invention. The communication system with remote applications 400 includes a server system 402 and a smart communication device 404 communicating through a communication network 406 through a voice interface. The smart communication device 404 contacts the server system 402. The server system 402 provides launching of an application on the smart communication device 404.

An operator attendant 408, such as an automated attendant, a help desk operator or support personnel, may be contacted to access the server system 402. The server system 402 may be a compute server, application server, navigation server, a voice recognition server or other communication server system. The smart communication device 404 may be a cell phone, satellite phone or other communication device. The communication network 406 may be one or more of a wireless network, telephone network, internet network or other communication medium.

The smart communication device 404 provides contact, such as a voice call, either by a voice command, speed dialing or a login, through the communication network 406 to the server system 402 or the operator attendant 408. The server system 402 may provide authentication for the smart communication device 404. The authentication may include activation, registration or verification. The smart communication device 404 may also pass certain information for the use of applications to the server system 402 through voice. The server system 402 responds to requests through the smart communication device 404 providing appropriate commands to launch a predetermined application on the smart communication device 404 with the information provided by the smart communication device 404 through voice command. The server system 402 can also provide appropriate commands to launch a predetermined application on other communication devices as instructed by the smart communication device 404.

For illustrative purposes, one of the smart communication device 404 is shown, although it is understood that any number of devices may be used in the communication system with remote applications 400 as well. Further, for illustrative purposes, the server system 402 is shown as one server, although it is understood that any number of devices may be used in the communication system with remote applications 400 as well.

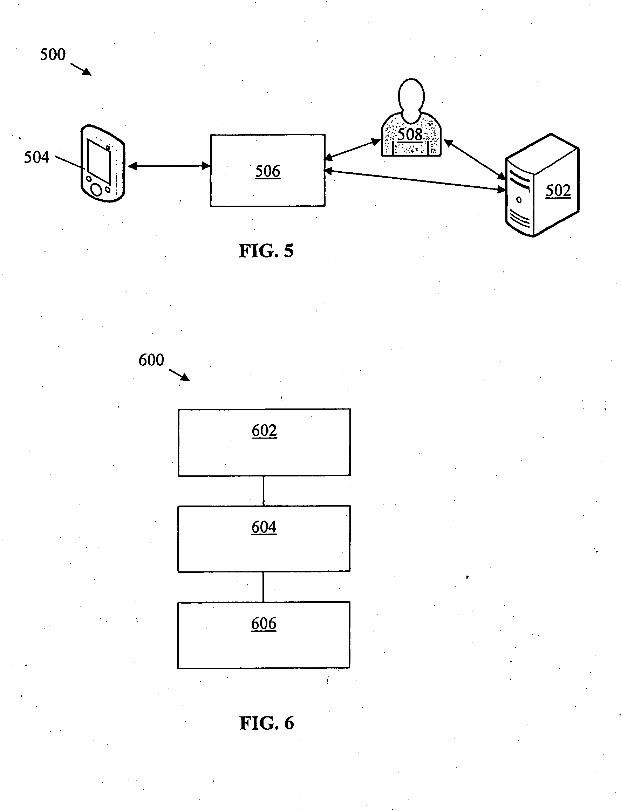

Referring now to FIG. 5, therein is shown an architectural diagram of a communication system with remote applications 500 in an embodiment of the present invention. The communication system with remote applications 500 includes a server system 502 and a portable compute device 504 communicating through a communication network 506 through a voice interface. The portable compute device 504 contacts the server system 502. The server system 502 provides launching of an application on the portable compute device 504.

An operator attendant 508, such as a help desk attendant or support personnel, may be contacted to access the server system 502. The server system 502 may be a compute server, application server, navigation system, voice recognition server or other communication server system. The portable compute device 504 may be a cell phone, satellite phone or other communication device. The communication network 506 may be one or more of a wireless network, telephone network, internet network or other communication medium.

The portable compute device 504 provides contact, such as a voice call, voice command, speed dialing, a login or network call, through the communication network 506 to the server system 502 or the operator attendant 508. The server system 502 may provide authentication for the portable compute device 504. The authentication may include activation, registration or verification. The portable compute device 504 may also pass certain information for the use of applications to the server system 502 through voice. The server system 502 responds to requests through the portable compute device 504 providing appropriate commands to launch a predetermined application on the portable compute device 504 with the information provided by the smart communication device 404 through voice command. The server system 502 can also provide appropriate commands to launch a predetermined application on other communication devices as instructed by the portable compute device 504.

For illustrative purposes, one of the portable compute device 504 is shown, although it is understood that any number of devices may be used in the communication system with remote applications 500 as well. Further, for illustrative purposes, the server system 502 is shown as one server, although it is understood that any number of devices may be used in the communication system with remote applications 100 as well.

Referring now to FIG. 6, therein is shown a flow chart of a communication method 600 for providing the communication system with remote applications 100 in an embodiment of the present invention. The method 600 includes providing a server system for accessing a communication network connected to the server system and for contacting a communication device connected to the communication networkin a block 602; receiving information through voice at the server system from the communication device in a block 604; and replying from the server system based on the voice for launching an application on the communication device through the communication network in a block 606.

In greater detail, a method to provide the communication system with remote applications 100, in an embodiment of the present invention, is performed as follows:
1. Providing a communication device having a voice dialing, through either voice command, speed dialing or just manual dialing from typing in a phone number or address book. (FIG. 1)
2. Accessing a communication network having a telephone network with the communication device. (FIG. 1)
3. Contacting a server system having authentication for the communication device through the communication network. (FIG. 1)
4. Providing information for the client application to the server, if needed.
5. Communicating commands from the server system to launch a predetermined application on the communication device. (FIG. 1)
6. Communicating services requests and replies between the communication device and the server system. (FIG. 1)

It has been discovered that the communication system with remote applications provides significantly reduced user input requirements. Having the server system provide the appropriate commands to launch the remote applications on the communication device significantly reduces user input requirements. In the case of voice commands or speed dialing, a user may operate the communication system with remote applications completely hands-free.

It has been discovered that the present invention thus has numerous aspects. An aspect is that the present invention provides increased safety and convenience. Using hands free operation of the communication system significantly increases safety in mobile environments, particularly during vehicle operation. The hands free operation also provides a convenient alternative to non-ergonomic input devices.

Another aspect is that the communication system with remote applications would provide applications and services with a reduced need for key strokes, menu systems, icon selection or graphics user interface. The communications system with remote applications would facilitate interaction with applications and services as well as broaden compatibility with devices and user access restrictions or preferences.

Thus, it has been discovered that the communication system method and apparatus of the present invention furnish important and heretofore unknown and unavailable solutions, capabilities, and functional aspects. The resulting processes and configurations are straightforward, cost-effective, uncomplicated, highly versatile and effective, can be implemented by adapting known technologies, and are thus readily suited for efficiently and economically providing a system that is fully compatible with conventional manufacturing processes and technologies.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations, which fall within the scope of the included claims. All matters set forth herein or shown in the accompanying drawings are to be interpreted in an illustrative and non-limiting sense.

## Claims

1. A communication method (600) comprising:
providing a server system (102) for accessing a communication network (106) connected to a communication device (104) connected to the communication network (106);
receiving at the server system (102) information (302) through a voice command from the communication device (104);
replying (308) from the server system (102) based on the voice by sending an application command (306) from the server system (102) through the communication network (106) for launching a predetermined application (208) residing on the communication device (104) and interacting with the application (310) after the application has been launched, **characterized in that** replying (308) from the server system (102) based on the voice further comprises sending an application command (306) from the server system (102) for launching an application (208) on other communication devices.

2. The method (600) as claimed in claim 1, wherein the application command is specific to the communication device and the predetermined application.

3. The method (600) as claimed in one of the preceding claims, wherein replying from the server system (102) based on the voice comprises responding to a voice call with automated appropriate message-based commands including SMS, stream-based or packet-based, to launch a predetermined application on the communication device (104) wherein a reply is real time or non real time, through the communication network (106).

4. The method (600) as claimed in one of the preceding claims wherein replying from the server system (102) comprises operating the server system (102) for authenticating the communication device connection (304)).

5. A communication system (100) comprising:
a server system (102) for accessing a communication network (106) connected to the server system (102) and for contacting a communication device (104) connected to the communication network (106), including:
means for receiving at the server system (102) information (302) through a voice command from the communication device (104), and
means for replying (308) from the server system (102) based on the voice by sending an application command (306) through the communication network (106) for launching a predetermined application (208) residing on the communication device (104), wherein the server system (102) is configured for interacting with the application (310), after the application has been launched, **characterized in that** said means for replying (308) is adapted to send an application command (306) from the server system (102) for launching an application (208) on other communication devices.

6. The system (500) as claimed in claim 5 wherein the communication device (104) comprises a portable compute device (504).

7. The system (100) as claimed in one of claims 5 and 6 wherein the server system (102) is configured for authenticating the communication device (104).

## Patentansprüche

1. Kommunikationsverfahren (600) mit den folgenden Schritten:
Bereitstellen eines Serversystems (102) zur Verbindungsherstellung mit einem Kommunikationsnetzwerk (106), wobei das Serversystem (102) mit einem Kommunikationsgerät (104) und dem Kommunikationsnetzwerk (106) verbunden ist;
Empfangen von Informationen (302) am Serversystem (102) durch einen von dem Kommunikationsgerät (104) ausgehenden Sprachbefehl;
Antworten (308) durch das Serversystem (102) abhängig von dem Sprachbefehl, wobei ein Anwendungsbefehl (306) zum Ausführen einer auf dem Kommunikationsgerät (104) befindenden und vordefinierten Anwendung (208) von dem Serversystem (102) über das Kommunikationsnetz (106) gesendet wird, und wobei mit der ausgeführten Anwendung interagiert wird;
**dadurch gekennzeichnet, dass** das vom Sprachbefehl abhängige Antworten durch das Serversystem (308) das Senden eines Anwendungsbefehls (306) von dem Serversystem umfasst, wodurch eine Anwendung (208) auf weiteren Kommunikationsgeräten ausgeführt wird.

2. Das Verfahren (600) nach Anspruch 1, wobei der Anwendungsbefehl gemäß dem Kommunikationsgerät und der vordefinierten Anwendung ausgebildet ist.

3. Das Verfahren (600) nach einem der vorhergehenden Ansprüche, wobei das vom Sprachbefehl abhängige Antworten durch das Serversystem (102) zum Ausführen einer vordefinierten Anwendung auf dem Kommunikationsgerät (104), das automatisierte Antworten auf einen Sprachanruf mit geeigneten Nachrichtenbefehlen umfasst, wobei die Nachrichtenbefehle unter anderem als SMS, gestreamte oder paketbasierte Nachrichtenbefehle ausgebildet sind, wobei das Antworten in Echtzeit oder nicht Echtzeit über das Kommunikationsnetz (106) erfolgt.

4. Das Verfahren (600) nach einem der vorhergehenden Ansprüche, wobei das Antworten durch das Serversystem (308) das Anwenden des Serversystems (102) zur Authentifizierung der Verbindung mit dem Kommunikationsgerät (304) umfasst.

5. Kommunikationssystem (100) aufweisend:
ein Serversystem (102) zur Verbindungsherstellung mit einem mit dem Serversystem (102) verbundenen Kommunikationsnetzwerk (106) und zur Verbindungsherstellung mit einem mit dem Serversystem (102) verbundenen Kommunikationsgerät (104), das Serversystem (102) umfasst:
eine Empfangseinheit zum Empfangen von Informationen (302) von dem Kommunikationsgerät (104) durch einen Sprachbefehl;
eine Rückmeldungseinheit (308), derart ausgebildet, dass sie abhängig von dem Sprachbefehl eine Antwort gibt (308), wobei ein Anwendungsbefehl (306) zum Ausführen einer auf dem Kommunikationsgerät (104) befindenden und vordefinierten Anwendung von dem Serversystem (102) über das Kommunikationsnetz (106) gesendet wird, und wobei das Serversystem (102) derart ausgebildet ist, dass es mit der ausgeführten Anwendung interagiert,
**dadurch gekennzeichnet, dass** die Rückmeldungseinheit (308) derart ausgebildet ist, dass sie einen Anwendungsbefehl (306) von dem Serversystem sendet, wodurch eine Anwendung (208) auf weiteren Kommunikationsgeräten ausgeführt wird.

6. Das System (500) nach Anspruch 5, wobei das Kommunikationsgerät (104) eine mobile Recheneinheit (504) aufweist.

7. Das System nach Anspruch 5 oder 6, wobei das Serversystem (102) zur Authentifizierung des Kommunikationsgerätes (104) ausgebildet ist.

## Revendications

1. Procédé de communication (600), consistant à :
fournir un système de serveur (102) pour accéder à un réseau de communication (106) connecté à un dispositif de communication (104) lui-même connecté au réseau de communication (106) ;
recevoir, au niveau du système de serveur (102), des informations (302), par le biais d'une commande vocale du dispositif de communication (104) ;
répondre (308), à partir du système de serveur (102), sur la base de la voix, en envoyant une commande d'application (306), à partir du système de serveur (102), à travers le réseau de communication (106), en vue d'initier une application prédéterminée (208) résidant sur le dispositif de communication (104), et interagir avec l'application (310) dès lors que l'application a été initiée, **caractérisé en ce que** la réponse (308) à partir du système de serveur (102), sur la base de la voix, consiste en outre à envoyer une commande d'application (306), à partir du système de serveur (102), en vue d'initier une application (208) sur d'autres dispositifs de communication.

2. Procédé (600) selon la revendication 1, dans lequel la commande d'application est spécifique au dispositif de communication et à l'application prédéterminée.

3. Procédé (600) selon l'une quelconque des revendications précédentes, dans lequel la réponse, à partir du système de serveur (102), sur la base de la voix, consiste à répondre à un appel vocal avec des commandes à base de messages appropriées automatisées, incluant des messages SMS, des messages à base de paquets, ou des messages à base de flux, en vue d'initier une application prédéterminée sur le dispositif de communication (104), dans lequel une réponse est en temps réel ou en temps non réel, par l'intermédiaire du réseau de communication (106).

4. Procédé (600) selon l'une quelconque des revendications précédentes, dans lequel la réponse, à partir du système de serveur (102), consiste à exploiter le système de serveur (102) en vue d'authentifier la connexion de dispositif de communication (304).

5. Système de communication (100) comprenant :
un système de serveur (102), destiné à accéder à un réseau de communication (106) connecté au système de serveur (102), et à établir un contact avec un dispositif de communication (104) connecté au réseau de communication (106), incluant :
un moyen pour recevoir, au niveau du système de serveur (102), des informations (302), par le biais d'une commande vocale du dispositif de communication (104) ; et
un moyen pour répondre (308), à partir du système de serveur (102), sur la base de la voix, en envoyant une commande d'application (306), à travers le réseau de communication (106), en vue d'initier une application prédéterminée (208) résidant sur le dispositif de communication (104), dans lequel le système de serveur (102) est configuré de manière à interagir avec l'application (310), dès lors que l'application a été initiée, **caractérisé en ce que** le moyen de réponse (308) est apte à envoyer une commande d'application (306), à partir du système de serveur (102), en vue d'initier une application (208) sur d'autres dispositifs de communication.

6. Système (500) selon la revendication 5, dans lequel le dispositif de communication (104) comprend un dispositif informatique portable (504).

7. Système (100) selon l'une quelconque des revendications 5 et 6, dans lequel le système de serveur (102) est configuré de manière à authentifier le dispositif de communication (104).
